# EUROPEAN PATENT APPLICATION

(11) **EP 4 814 637 A1**
(43) Date of publication of application: **30.09.2026**
(21) Application number: 24896495.9
(22) Date of filing: 26.11.2024
(51) Int. Cl.: G05B 23/02, B60R 16/023

(54) **ELECTRICAL EQUIPMENT SYSTEM FOR VEHICLE AND VEHICLE**

(30) Priority: 30.11.2023 CN 202311637537
(71) Applicant: BYD Company Limited, Shenzhen, Guangdong 518118 (CN)
(72) Inventor: ZHONG, Yilin, Shenzhen, Guangdong 518118 (CN); WANG, Wei, Shenzhen, Guangdong 518118 (CN); LIU, Dan, Shenzhen, Guangdong 518118 (CN); SHENG, Hejiang, Shenzhen, Guangdong 518118 (CN); LUO, Rongzhi, Shenzhen, Guangdong 518118 (CN)
(74) Representative: Taor, Simon Edward William
(86) International application number: PCT/CN2024/134381
(87) International publication number: WO 2025/113406

(57) **Abstract**

An electrical equipment system for a vehicle and a vehicle are provided. The electrical equipment system may comprise a central controller, M electrical devices, and a first communication line. The central controller is in communication connection with the M electrical devices via the first communication line, M is a positive integer greater than 1. The electrical devices are configured to collect status information of the vehicle and send the status information to the central controller. The central controller is configured to receive the status information of the vehicle.

## Description

### CROSS-REFERENCE TO RELATED APPLICATIONS

The present disclosure claims priority to Chinese Patent Application No. 202311637537.4 filed on November 30, 2023, entitled "ELECTRICAL EQUIPMENT SYSTEM FOR VEHICLE AND VEHICLE", which is incorporated herein by reference in its entirety.

### FIELD

The present disclosure relates to the technical field of controller technologies, and in particular, to an electrical equipment system for a vehicle and a vehicle.

### BACKGROUND

As people's requirements for vehicle performance continue to increase, the types and quantities of electrical devices equipped on vehicles are also increasing. At present, when a vehicle is equipped with a plurality of electrical devices, to allow the vehicle controller to control and communicate with each electrical device, it is necessary to arrange the same number of independent lines as the number of electrical devices, and connect each electrical device with the central controller in a direct connection manner, which greatly increases the complexity of vehicle wiring harness connection, increases the manufacturing cost of the vehicle, and also increases the failure rate of the vehicle. Therefore, how to reduce the manufacturing cost of the vehicle while reducing the failure rate of the vehicle and improving the safety of the vehicle is an urgent problem to be solved.

### SUMMARY

The present disclosure provides an electrical equipment system for a vehicle and a vehicle, which can realize communicative connection between a central controller and a plurality of electrical devices via a first communication line, contributing to reducing the complexity of wiring inside the vehicle, thereby reducing the failure rate of the vehicle and improving the safety of the vehicle.

In a first aspect, an embodiment of the present disclosure provides an electrical equipment system for a vehicle, the electrical equipment system for a vehicle may include: a central controller, M electrical devices, and a first communication line, the central controller is in communication connection with the M electrical devices via the first communication line, wherein M is a positive integer greater than 1;
the electrical device may be configured to collect status information of a vehicle and send the status information to the central controller; and
the central controller may be configured to receive the status information of the vehicle.

In a possible implementation, the M electrical devices include K electrical device groups, wherein K is a positive integer, K < M;
an electrical device group includes one or more electrical devices, and the distance between any two electrical devices in an electrical device group including a plurality of electrical devices is less than a preset value.

In another possible implementation, each of the K electrical device groups is electrically connected to the first communication line via a second communication line.

In another possible implementation, the second communication line includes a second main communication line and one or more second branch communication lines, and the one or more second branch communication lines are electrically connected to the first communication line via the second main communication line.

In another possible implementation, the second communication line is a wireless communication line or a wired communication line.

In another possible implementation, the communication mode of the first communication line is one of Ethernet, CAN communication, LIN communication, or optical communication.

In another possible implementation, the central controller includes a first interface and a second interface, the first communication line is electrically connected to the first interface and the second interface, and each of the M electrical devices is electrically connected to the first interface or the second interface via the first communication line.

In a possible implementation, the first communication line includes a surrounding closed line, which enables the electrical devices to be connected to the first communication line nearby.

In another possible implementation, the electrical equipment system further includes a power supply module, the power supply module is electrically connected to the central controller and the M electrical devices.

In another possible implementation, the power supply module is electrically connected to the central controller and the M electrical devices via the first communication line.

In another possible implementation, the electrical device is provided with a first communication interface and a first power line interface, the first communication interface is electrically connected to the central controller via the first communication line, and the first power line interface is electrically connected to the power supply module via the first communication line.

In another possible implementation, the electrical device includes an electrical device body and a wiring harness connector, the first communication interface and the first power line interface are disposed on the wiring harness connector, and the wiring harness connector is electrically connected to the electrical device body.

In another possible implementation, the electrical device includes at least one of an actuator or a sensor.

In another possible implementation, the central controller is further configured to generate a control instruction based on the status information of the vehicle and send the control instruction to the electrical device; and the electrical device is further configured to receive the control instruction.

In a second aspect, an embodiment of the present disclosure provides a vehicle equipped with the electrical equipment system for a vehicle according to the first aspect.

It can be seen that the electrical equipment system for a vehicle according to the present disclosure can realize communicative connection between the central controller and a plurality of electrical devices via the first communication line, contributing to reducing the complexity of wiring inside the vehicle, thereby reducing the failure rate of the vehicle and improving the safety of the vehicle, and also helps technicians to locate a fault node of a faulty vehicle.

Furthermore, the first communication line includes a surrounding closed line, which enables the electrical devices to be connected to the first communication line nearby, so that the electrical devices are connected to the central controller, reducing the length of the wiring harness inside the vehicle.

### BRIEF DESCRIPTION OF THE DRAWINGS

In order to illustrate the technical solutions in the embodiments of the present disclosure more clearly, the drawings required for describing the embodiments are briefly described below. Obviously, the drawings in the following description are some embodiments of the present disclosure, and those skilled in the art can obtain other drawings according to these drawings without creative work.
FIG. 1 is a schematic architecture diagram of an electrical equipment system for a vehicle according to an embodiment of the present disclosure.
FIG. 2 is a schematic architecture diagram of an electrical equipment system for a vehicle according to another embodiment of the present disclosure.
FIG. 3 is a schematic scene diagram for determining an electrical device group according to an embodiment of the present disclosure.
FIG. 4 is a schematic scene diagram for distinguishing a first communication line according to an embodiment of the present disclosure.
FIG. 5 is a schematic structural diagram of an electrical device according to an embodiment of the present disclosure.
FIG. 6 is a schematic structural diagram of a wiring harness connector according to an embodiment of the present disclosure.
FIG. 7 is a schematic scene diagram of a vehicle control process according to an embodiment of the present disclosure.
FIG. 8 is a schematic flow diagram of a control method according to an embodiment of the present disclosure.
FIG. 9 is a schematic composition diagram of a vehicle according to an embodiment of the present disclosure.
FIG. 10 is a schematic composition diagram of a vehicle according to another embodiment of the present disclosure.

### DETAILED DESCRIPTION

The technical solutions in the embodiments of the present disclosure will be clearly and completely described below in conjunction with the drawings. Obviously, the described embodiments are part of the embodiments of the present disclosure, rather than all of the embodiments. All other embodiments obtained by those skilled in the art based on the embodiments of the present disclosure without creative work shall fall within the protection scope of the present disclosure.

The terms "first", "second", "third", "fourth" etc. in the specification, claims and the drawings of the present disclosure are used to distinguish different objects, rather than to describe a specific order. In addition, the terms "include" and "have" and any variations thereof are intended to cover non-exclusive inclusion. For example, a process, method, system, product or device including a series of operations or units is not limited to the listed operations or units, but optionally further includes unlisted operations or units, or optionally further includes other operations or units inherent to the process, method, product or device.

Reference to an "embodiment" herein means that a particular feature, result or characteristic described in conjunction with the embodiment can be included in at least one embodiment of the present disclosure. The appearance of the phrase in various places in the specification does not necessarily refer to the same embodiment, nor is it an independent or alternative embodiment mutually exclusive with other embodiments. Those skilled in the art understand explicitly and implicitly that the embodiments described herein can be combined with other embodiments.

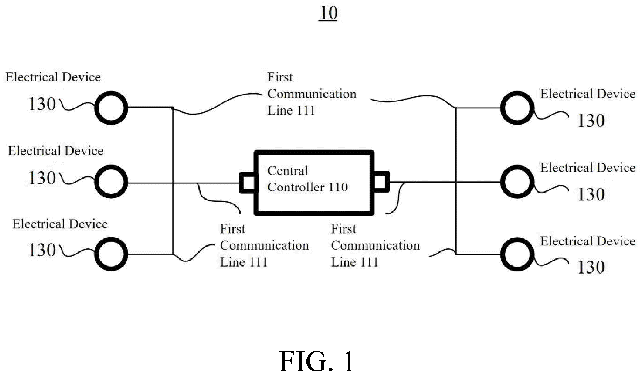

In order to better understand the technical solutions of the embodiments of the present disclosure, an electrical equipment system for a vehicle according to the embodiment of the present disclosure will be described in detail below with reference to FIG. 1.

Please refer to FIG. 1, which is a schematic architecture diagram of an electrical equipment system for a vehicle according to an embodiment of the present disclosure. As shown in FIG. 1, an electrical equipment system 10 for a vehicle comprises a central controller 110, a first communication line 111, and M electrical devices 130. The central controller 110 may be in communication connection with the M electrical devices 130 via the first communication line 111, wherein M is a positive integer, M > 1;

the electrical device 130 may be configured to collect status information of a vehicle and send the status information to the central controller 110, wherein the status information is related to the function and/or attribute of the electrical device.

The central controller 110 may be configured to receive the status information of the vehicle.

Wherein, the type of the electrical device 130 may be a sensor or an actuator. The present disclosure does not limit the types of sensors and actuators. For example, the sensor may be a pressure sensor, an ultrasonic sensor, an intelligent sensor, or the like, and the actuator may be an intelligent actuator. Furthermore, the electrical device 130 may further comprise at least one sensor and/or at least one actuator. Exemplarily, if the specific form of the electrical device 130 is a sensor disposed in a door switch, when a user opens the door, the sensor in the door switch will collect a switch signal and send the switch signal to the central controller 110 as a kind of status information. If the specific form of the electrical device 130 is a pressure sensor disposed on a seat, when a user sits on the passenger seat, the pressure sensor on the passenger seat will collect a pressure signal and send the pressure signal to the central controller 110 as a kind of status information. If the specific form of the electrical device 130 is an ultrasonic sensor, when there is an obstacle around the vehicle, the ultrasonic sensor will receive an ultrasonic signal reflected by the obstacle and send the ultrasonic signal to the central controller 110 as a kind of status information.

In a possible implementation, the M electrical devices comprise K electrical device groups, wherein K is a positive integer, K < M;
an electrical device group comprises one or more electrical devices, and the distance between any two electrical devices in an electrical device group comprising a plurality of electrical devices is less than a preset value.

It should be noted that dividing the M electrical devices 130 into K electrical device groups 140 does not physically package the plurality of electrical devices 130 into an electrical device group, but only regards the plurality of electrical devices 130 meeting the preset conditions as an electrical device group 140.

Wherein, in the wiring structure, each electrical device group is electrically connected to the first communication line via a second communication line.

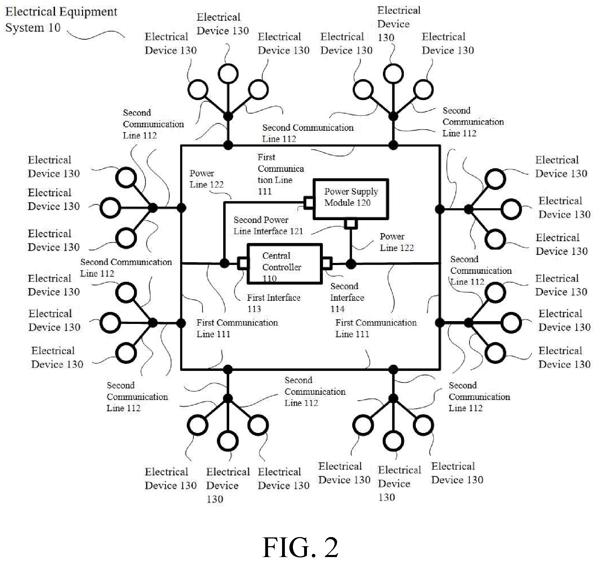

Exemplarily, please refer to FIG. 2, which is a schematic architecture diagram of an electrical equipment system for a vehicle according to another embodiment of the present disclosure. As shown in FIG. 2, the electrical equipment system 10 for a vehicle comprises a central controller 110, a power supply module 120, and an electrical device 130. The central controller 110 is in communication connection with the electrical device 130, and the central controller 110 is electrically connected to the power supply module 120;
the power supply module 120 may be configured to supply electric energy to the electrical device 130 and the central controller 110.

It should be noted that the number and connection manner of the first communication lines 111 shown in FIG. 2 are only for the purpose of clearly illustrating the structure of the electrical equipment system for a vehicle according to the embodiment of the present disclosure, and should not be construed as limiting the present disclosure. In practice, the number of the first communication lines 111 can be increased or decreased according to actual conditions, which is not limited herein.

Specifically, the electrical device 130 may be distributed in various areas of the vehicle, and the electrical device 130 may be connected to the first communication line 111 nearby via the second communication line 112, and then connected to the central controller 110 via the first communication line 111, thereby realizing communication interaction between the central controller 110 and the electrical device 130.

In a possible implementation, the electrical device 130 communicates and interacts with the central controller 110 directly, and all control instructions for the electrical device 130 in the vehicle are issued by the central controller 110.

Optionally, the communication mode between the central controller 110 and the electrical devices 130 comprises, but is not limited to, Ethernet, Controller Area Network (CAN bus protocol), Local Interconnect Network (LIN), and optical communication. If the central controller 110 and the electrical device 130 communicate in these ways, the first communication line 111 and the second communication line 112 can be regarded as wired communication lines. On the contrary, the communication line (such as the first communication line 111 and the second communication line 112) between the electrical device 130 and the central controller 110 may also be a virtual line (or wireless communication line), and the communication signal can be transmitted in a wireless communication manner, such as Bluetooth, Wireless Fidelity (WiFi), or radio frequency technology.

Optionally, the second communication line comprises a second main communication line and one or more second branch communication lines, and the one or more second branch communication lines are electrically connected to the first communication line via the second main communication line.

Exemplarily, the second communication line 112 may comprise a second main communication line and a second branch communication line. A plurality of electrical devices 130 in the same electrical device group 140 may couple their respective corresponding second branch communication lines to the second main communication line corresponding to the electrical device group 140 via the same interface, furthermore, it can be understood that one electrical device group 140 corresponds to one second main communication line. Based on the above content, it can be considered that one electrical device group 140 is connected to the first communication line 111 via one second main communication line, which is different from the prior art that requires the same number of independent communication lines as the number of electrical devices to realize one-to-one connection between each electrical device and the central controller, the solution according to the embodiment of the present disclosure contributes to reducing the demand for the length of communication lines and/or power lines in a vehicle, thereby reducing the manufacturing cost of the vehicle.

As shown in FIG. 2, the first communication line 111 may comprise a surrounding closed line, which enables each electrical device to be connected to the first communication line 111 nearby. For example, the three second electrical devices 130 at the upper right corner in FIG. 2 may be connected to the first communication line from the upper right corner of the surrounding closed line nearby, so as to realize direct connection with the central controller 110, which can shorten the length of the wiring harness in the vehicle.

In FIG. 2, the surrounding closed line is rectangular, wherein the line located above can be understood as being disposed in the front compartment of the vehicle, and the line located below can be understood as being disposed in the rear compartment of the vehicle. The lines on both sides can be understood as being disposed on both sides of the vehicle body respectively. In this way, it is convenient for the electrical devices located in various parts of the vehicle to be connected to the first communication line 111 nearby, so as to realize direct connection with the central controller 110.

In a possible implementation, the embodiment of the present disclosure may regard the electrical devices located in the same physical area as an electrical device group. The physical area can be understood as a complete and independent component in the vehicle, such as a car door, a car roof, a chassis, a seat, etc., which is not limited herein.

In another possible implementation, the embodiment of the present disclosure may regard a plurality of electrical devices 130, the mutual distance between any two of which is less than a preset value, as one electrical device group 140, that is, the distance between any two electrical devices 130 in the same electrical device group is less than or equal to the preset value, which is set by technicians according to actual conditions and is not limited herein.

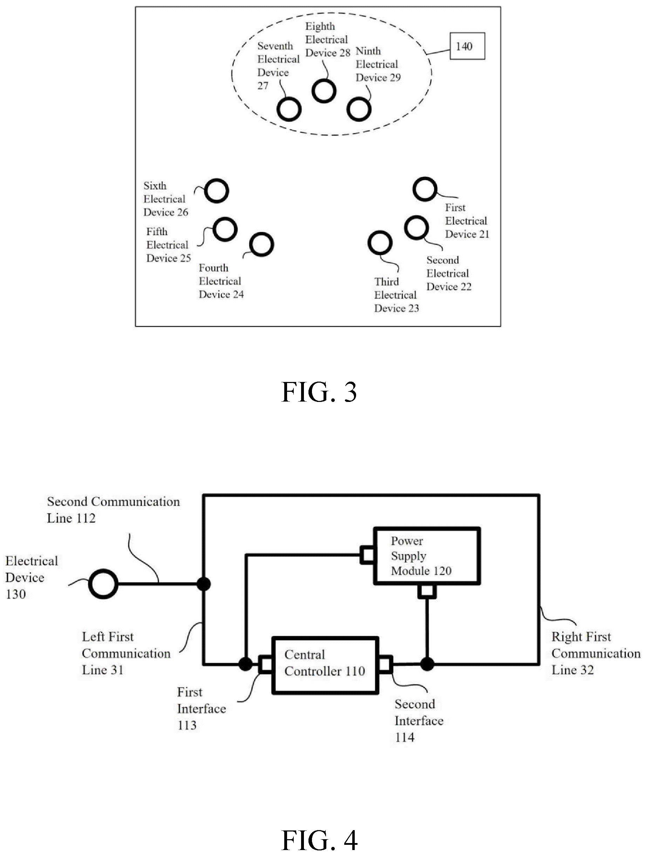

Exemplarily, please refer to FIG. 3, which is a schematic scene diagram for determining an electrical device group according to the present disclosure. As shown in FIG. 3, it is assumed that a vehicle is equipped with a first electrical device 21, a second electrical device 22, a third electrical device 23, a fourth electrical device 24, a fifth electrical device 25, a sixth electrical device 26, a seventh electrical device 27, an eighth electrical device 28, and a ninth electrical device 29, and the distances between each electrical device are shown in Table 1:

**Table 1**

| Distance (cm) | First electrical device 21 | Second electrical device 22 | Third electrical device 23 | Fourth electrical device 24 | Fifth electrical device 25 | Sixth electrical device 26 | Seventh electrical device 27 | Eighth electrical device 28 | Ninth electrical device 29 |
|---|---|---|---|---|---|---|---|---|---|
| First electrical device 21 | - | 15 | 30 | 80 | 85 | 90 | 80 | 75 | 70 |
| Second electrical device 22 | 15 | - | 15 | 75 | 80 | 85 | 85 | 80 | 75 |
| Third electrical device 23 | 30 | 15 | - | 70 | 75 | 80 | 90 | 85 | 80 |
| Fourth electrical device 24 | 80 | 75 | 70 | - | 15 | 30 | 80 | 85 | 90 |
| Fifth electrical device 25 | 85 | 80 | 75 | 15 | - | 15 | 75 | 80 | 85 |
| Sixth electrical device 26 | 90 | 85 | 80 | 30 | 15 | - | 70 | 75 | 80 |
| Seventh electrical device 27 | 80 | 85 | 90 | 80 | 75 | 70 | - | 15 | 30 |
| Eighth electrical device 28 | 75 | 80 | 85 | 85 | 80 | 75 | 15 | - | 15 |
| Ninth electrical device 29 | 70 | 75 | 80 | 90 | 85 | 80 | 30 | 15 | - |

When the preset value is 30 cm, according to the distance values shown in Table 1, the first electrical device 21, the second electrical device 22, and the third electrical device 23 can be classified into the same electrical device group; the fourth electrical device 24, the fifth electrical device 25, and the sixth electrical device 26 can be classified into the same electrical device group; and the seventh electrical device 27, the eighth electrical device 28, and the ninth electrical device 29 can be classified into the same electrical device group.

It should be noted that although FIG. 3 only shows nine electrical devices (or three electrical device groups), it does not mean that the vehicle or the electrical equipment system of the vehicle control system according to the embodiment of the present disclosure can only comprise nine electrical devices (or three electrical device groups), and should not be construed as limiting the present disclosure. In practice, the configuration can be carried out according to actual conditions, which is not limited herein.

In a possible implementation, when the distance between two electrical devices is less than the preset value but the two electrical devices do not belong to the same physical area, the two electrical devices cannot be divided into an electrical device group.

Exemplarily, it is assumed that the first electrical device 21, the second electrical device 22, the fourth electrical device 24, the fifth electrical device 25, and the sixth electrical device 26 are located on the left door, and the third electrical device 23 is located on the driver's seat (considered as the seat adjacent to the left door), in this case, even if the distance between any two of the first electrical device 21, the second electrical device 22, and the third electrical device 23 is less than the preset value, the first electrical device 21, the second electrical device 22, and the third electrical device 23 cannot be classified into the same electrical device group; while the fourth electrical device 24, the fifth electrical device 25, and the sixth electrical device 26 are located in the same physical area (i.e., the left door) and the distance between any two of the fourth electrical device 24, the fifth electrical device 25, and the sixth electrical device 26 is less than the preset value, the fourth electrical device 24, the fifth electrical device 25, and the sixth electrical device 26 can be classified into the same electrical device group.

Still referring to FIG. 2, in a possible implementation, the number of the first communication lines 111 is greater than 1, and if the distance from the second communication line 112 to the central controller 110 via the first main communication line is less than or equal to the distance from the second communication line 112 to the central controller 110 via the first secondary communication line, then the first main communication line is the first communication line connected and conducted with the second communication line 112, and the first secondary communication line is the first communication line except the first main communication line.

It should be noted that connecting the electrical device 130 with the first communication line 111 (or the central controller 110) in a nearby connection manner contributes to shortening the transmission time of the communication signal.

In another possible implementation, the central controller 110 may comprise a first interface 113 and a second interface 114, the central controller 110 may be configured to be electrically connected to the first communication line 111 via the first interface 113 and the second interface 114.

Optionally, the central controller 110 comprises a plurality of first interfaces 113 and/or second interfaces 114, and each first interface 113 and/or second interface 114 can lead out one first communication line 111. Exemplarily, if the total number of the first interfaces 113 and the second interfaces 114 of the central controller 110 is 3, the electrical equipment system 10 of the entire vehicle can comprise 3 first communication lines; if the total number of the first interfaces 113 and the second interfaces 114 of the central controller 110 is 4, the electrical equipment system 10 of the entire vehicle can comprise 4 first communication lines; if the total number of the first interfaces 113 and the second interfaces 114 of the central controller 110 is 5, the electrical equipment system 10 of the entire vehicle can comprise 5 first communication lines, and so on.

It should be noted that the electrical device 130 can communicate and interact with the central controller 110 via any one of the first interfaces 113 and/or the second interfaces 114.

Exemplarily, please refer to FIG. 4, which is a schematic scene diagram for distinguishing a first communication line according to an embodiment of the present disclosure.

As shown in FIG. 4, two connection lines are provided between the electrical device 130 and the central controller 110: namely, "the second communication line 112 - the left first communication line 31 (the left first communication line 31 is coupled with the first interface 113 of the central controller 110)" and "the second communication line 112 - the right first communication line 32 (the right first communication line 32 is coupled with the second interface 114 of the central controller 110)". In terms of the length of the two connection lines, the left first communication line 31 can be regarded as the first main communication line, and the right first communication line 32 can be regarded as the first secondary communication line. In this case, the electrical device 130 preferentially selects to transmit signals to or interact with the central controller 110 via the connection path of "the second communication line 112 - the left first communication line 31".

Furthermore, if the left first communication line 31 fails (such as an open circuit), the electrical device 130 can transmit status information from the second interface 114 to the central controller 110 via "the second communication line 112 - the right first communication line 32", and can also receive control instructions sent by the central controller 110 from the second interface 114 via "the second communication line 112 - the right first communication line 32".

Optionally, the selection of the power supply line between the electrical device 130 and the power supply module 120 and the selection of the power supply line between the power supply module 120 and the central controller 110 can also refer to the selection of the connection line between the electrical device 130 and the central controller 110 described above.

In some possible implementations, the multiple first communication lines do not interfere with each other.

In another possible implementation, still referring to FIG. 2, the power supply module 120 is electrically connected to the central controller 110 and each electrical device 130. The power supply module 120 may comprise at least one second power line interface 121, and the second power line interface 121 is connected to the first communication line 111 via a power line 122. In this way, the power supply module 120 may be configured to be electrically connected to the first communication line 111 via the power line 122 coupled to at least one second power line interface 121.

Wherein, the power supply module 120 may be a low-voltage power supply, and the power line 122 may be a low-voltage power line. Specifically, the power supply module 120 can be connected to the first communication line 111 via the power line 122, thereby realizing the effect of supplying power to the central controller 110; the power supply module 120 can also be connected to the first communication line 111 via the power line 122, and then supply electric energy to the electrical device 130 via the second communication line 112.

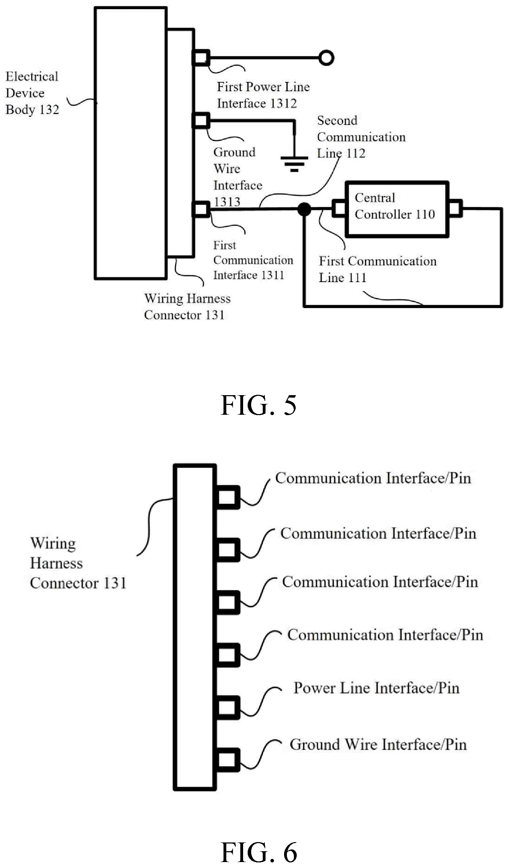

In another possible implementation, the electrical device may comprise a wiring harness connector. For example, please refer to FIG. 5, which is a schematic structural diagram of an electrical device according to an embodiment of the present disclosure.

As shown in FIG. 5, the electrical device 130 comprises a wiring harness connector 131 and an electrical device body 132. The wiring harness connector 131 is electrically connected to the electrical device body 132. The wiring harness connector 131 comprises a first communication interface 1311, a first power line interface 1312, and a ground wire interface 1313. The electrical device 130 can be connected to the second communication line 112 via the first communication interface 1311. The electrical device 130 receives electric energy via the first power line interface 1312. The electrical device 130 is grounded via the ground wire interface 1313, and the ground wire interface 1313 can form a circuit loop with the first power line interface 1312 into which current flows.

Specifically, in conjunction with FIG. 4 and FIG. 5, the electrical device body 132 can send status information to the central controller 110 via the first communication interface 1311, the second communication line 112, and the first communication line 111, and can also receive control instructions sent by the central controller 110 via the first communication interface 1311. It can be understood that no drive line and signal acquisition line are needed between the electrical device body 132 and the central controller 110, and the electrical device body 132 can directly acquire status information (such as a sensor acquiring relevant sensor data), convert the status information into a digital signal in a format corresponding to the communication mode, and then transmit it to the central controller 110 via the second communication line 112 and the first communication line 111.

Furthermore, the central controller 110 can determine a control requirement according to the status signal sent by other electrical devices 130, generate a control instruction according to the control requirement, and finally transmit it to the corresponding electrical device 130 via the first communication line 111 and the second communication line 112.

Exemplarily, please refer to FIG. 6, which is a schematic structural diagram of a wiring harness connector according to an embodiment of the present disclosure.

As shown in FIG. 6, the wiring harness connector has 6 interfaces/pins, comprising four communication interfaces/pins (corresponding to the above-mentioned first communication interface 1311), one power line interface/pin (corresponding to the above-mentioned first power line interface 1312), and one ground wire interface/pin (corresponding to the above-mentioned ground wire interface 1313). It should be noted that although FIG. 6 shows four communication interfaces/pins, in practice, the number of communication interfaces/pins can be increased or decreased according to actual conditions, which is not limited herein.

It should be noted that the wiring harness connector 131 of the present disclosure must have three types of interfaces: a communication interface (for exchanging communication signals with the central controller 110), a power line interface (for receiving electric energy transmitted by the power supply module 120), and a ground wire interface (for forming a circuit loop). In the simplest case, the wiring harness connector 131 only needs to be configured with three interfaces, namely one communication interface/pin, one power line interface/pin, and one ground wire interface/pin.

In a possible implementation, the central controller 110 may also be configured to send a control instruction to the electrical device 130 that sends the status information. Wherein, the control instruction may be used to control the working state of the electrical device 130, such as startup, standby, or shutdown, and the like.

It should be noted that the embodiment of the present disclosure does not limit the timing when the central controller 110 receives the status information and sends the control instruction, that is, the central controller 110 may receive the status signal and send the control instruction at the same time, or receive the status signal first and then send the control instruction, or send the control instruction first and then receive the status signal. Exemplarily, the central controller 110 sends a control instruction to any electrical device 130 while receiving the status signal sent by any electrical device 130; or the central controller 110 sends a control instruction to any electrical device 130 after receiving the status signal sent by any electrical device 130; or the central controller 110 receives the status signal sent by any electrical device 130 after sending a control instruction to any electrical device 130.

Correspondingly, the embodiment of the present disclosure also does not limit the timing when the electrical device 130 receives the control instruction and sends the status information, that is, the electrical device 130 may receive the control instruction and send the status information at the same time, or receive the control instruction first and then send the status information, or send the status information first and then receive the control instruction. For example, the electrical device 130 receives the control instruction sent by the central controller 110 while sending the status signal to the central controller 110; or the electrical device 130 may first send the status information to the central controller 110, and then receive the control instruction corresponding to the status information sent by the central controller; or the electrical device 130 may first receive the control instruction sent by the central controller 110, and then send the status information to the central controller 110 based on the control instruction.

In another possible implementation, the central controller 110 may also be configured to send a control instruction to other electrical devices 130, wherein, the electrical device 130 refers to an electrical device that does not send status information. That is, one electrical device 130 may send status information to the central controller 110, and the central controller 110 may send a control instruction to the electrical device 130 or to another electrical device.

Exemplarily, in conjunction with FIG. 3, the central controller 110 may send control information corresponding to the fourth electrical device 24 to the fourth electrical device 24 while receiving the status information sent by the first electrical device 21; or the central controller 110 may send control information corresponding to the first electrical device 21 to the first electrical device 21 while receiving the status information sent by the first electrical device 21, wherein, the control information may be generated based on the status information sent by the first electrical device 21 last time, or generated based on the status information sent by other electrical devices except the first electrical device 21 (the status information is also generated before the central controller 110 receives the status information sent by the first electrical device 21 this time). Correspondingly, the first electrical device 21 may send status information corresponding to the first electrical device 21 to the central controller 110 while receiving the control information sent by the central controller 110, wherein, the status information may be collected spontaneously and/or periodically by the first electrical device 21, or collected under the instruction of the control instruction sent by the central controller 110 last time.

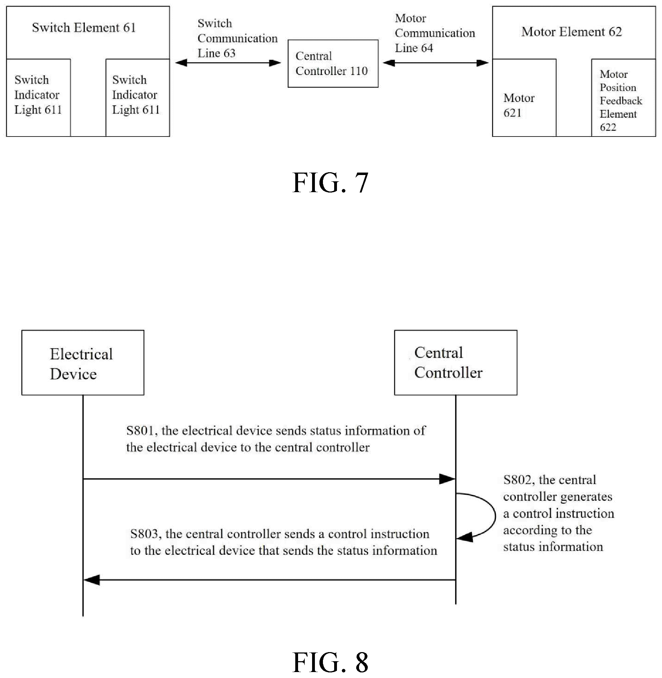

Exemplarily, please refer to FIG. 7, which is a schematic scene diagram of a vehicle control process according to an embodiment of the present disclosure. FIG. 7 illustrates an example in which the electrical devices in the electrical equipment system of the vehicle comprise a switch element 61 and a motor element 62.

As shown in FIG. 7, the switch element 61 comprises a switch indicator light 611 and a switch sensing element 612, and the motor element 62 comprises a motor 621 and a motor position feedback element 622. The central controller 110 establishes a communication connection with the switch element 61 via a switch communication line 63, and the central controller 110 establishes a communication connection with the motor element 62 via a motor communication line 64. Specifically, the switch sensing element 612 may be configured to sense a switch signal (such as sensing whether a door is open or not, etc.), and after the switch sensing element 612 senses the switch signal, it will send the switch signal to the central controller 110 via the switch communication line 63. After receiving the switch signal, the central controller 110 will feed back a first control instruction to the switch element 61, wherein, the first control instruction is used to control the switch indicator light 611 to switch to a power-on state, that is, to control the switch indicator light 611 to light up. At the same time, after receiving the switch signal, the central controller 110 will send a second control instruction to the motor element 62 via the motor communication line 64, wherein, the second control instruction is used to control the motor 621 to switch to a working state. At this time, the motor position feedback element 622 will send the position signal of the motor 621 to the central controller 110 via the motor communication line 64, which helps the central controller 110 to determine the position of the motor element 62, thereby improving the control algorithm.

In the foregoing example, the switch indicator light 611 is an actuator, which is used to execute the action of turning on/off the light. The switch sensing element 612 is a sensor, which is used to sense whether the door is open or not, so the switch element 61 can be considered to be both an actuator and a sensor. In addition, the motor 621 is an actuator, which is used to switch the working state according to the control instruction of the central controller 110, and the motor position feedback element 622 is a sensor, which is used to send the position signal of the motor 621 to the central controller 110 via the motor communication line 64, so the motor element 62 can also be considered to be both an actuator and a sensor.

It should be noted that the switch element 61 sends a switch signal to the central controller 110 and receives a first control instruction sent by the central controller 110 via the same communication interface, and the motor element 62 sends a position signal to the central controller 110 and receives a second control instruction sent by the central controller 110 via the same communication interface. Optionally, if it is necessary to implement the shunting of the status signal and the control instruction, two or more communication interfaces can be set. Exemplarily, the switch element 61 has a first sending communication interface and a first receiving communication interface, wherein, the switch element 61 can send a switch signal to the central controller 110 via the first sending communication interface, and the switch element 61 can receive the first control instruction sent by the central controller 110 via the first receiving communication interface. Exemplarily, the motor element 62 has a second sending communication interface and a second receiving communication interface, wherein, the motor element 62 can send a position signal to the central controller 110 via the second sending communication interface, and the motor element 62 can receive the second control instruction sent by the central controller 110 via the second receiving communication interface.

It can be seen that the electrical equipment system for a vehicle according to the present disclosure can reduce the complexity of vehicle wiring while ensuring that each electrical device can directly exchange communication signals with the central controller, which contributes to reducing the failure rate of the vehicle, and also facilitates the rapid location of a fault node of the vehicle. Furthermore, the present disclosure can also reduce the manufacturing cost of the vehicle by unifying the models of each wiring harness connector in the vehicle and simplifying the port types of the wiring harness connectors.

Please refer to FIG. 8, which is a schematic flow diagram of a control method according to an embodiment of the present disclosure, the method can be applied to a central controller in an electrical equipment system of a vehicle, and the electrical equipment system of the vehicle can comprise a central controller and electrical devices, where the central controller is in communication connection with the electrical devices.

As shown in FIG. 8, the method may comprise the following operations.

S801, the electrical device sends status information of the electrical device to the central controller.

Correspondingly, the central controller receives the status information of the electrical device.

Wherein, the type of the electrical device can refer to the foregoing description, and will not be repeated herein.

S802, the central controller generates a control instruction according to the status information.

Optionally, S803, the central controller sends a control instruction to the electrical device that sends the status information.

Correspondingly, the electrical device receives the control information sent by the central controller.

In a possible implementation, the number of the electrical devices is M, and the M electrical devices can be divided into K electrical device groups, wherein M is a positive integer, M is greater than 1, K is a positive integer, and K < M;
an electrical device group comprises one or more electrical devices, and the distance between any two electrical devices in an electrical device group comprising a plurality of electrical devices is less than a preset value.

Furthermore, each electrical device group is electrically connected to the first communication line via a second communication line.

Furthermore, the second communication line may comprise a second main communication line and one or more second branch communication lines, and the one or more second branch communication lines are electrically connected to the first communication line via the second main communication line.

It should be noted that dividing the M electrical devices into K electrical device groups does not physically package the plurality of electrical devices into an electrical device group, but only regards the plurality of electrical devices meeting the preset conditions as an electrical device group. In the wiring structure, a plurality of electrical devices in the same electrical device group can couple their respective corresponding second branch communication lines to the same second main communication line via the same interface, furthermore, it can be understood that one electrical device group corresponds to one second main communication line. Based on the above content, it can be considered that one electrical device group is connected to the first communication line via one second main communication line, which contributes to reducing the demand for the length of communication lines and/or power lines in a vehicle, thereby reducing the manufacturing cost of the vehicle.

In a possible implementation, the method may further comprise:
if the first main communication line fails, any one of the first secondary communication lines between the central controller and the electrical devices is turned on, and the central controller receives signals from the electrical devices via the first secondary communication line.

Wherein, the first main communication line is the first communication line connected and conducted with the second communication line, and the first secondary communication line is the first communication line except the first main communication line.

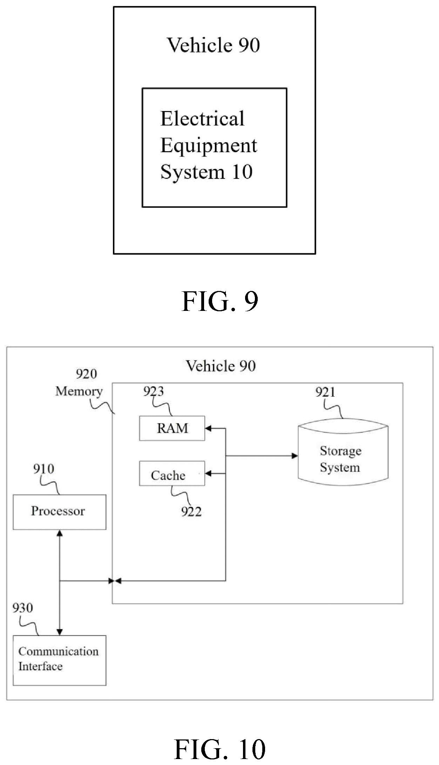

Please refer to FIG. 9, which is a schematic composition diagram of a vehicle according to an embodiment of the present disclosure. As shown in FIG. 9, the vehicle 90 comprises the electrical equipment system 10 for a vehicle as shown in FIG. 1, and can implement the method shown in FIG. 8.

Please refer to FIG. 10, which is a schematic composition diagram of a vehicle according to another embodiment of the present disclosure. As shown in FIG. 10, the vehicle 90 comprises a processor 910, a memory 920, and a communication interface 930. The processor 910, the memory 920, and the communication interface 930 are in communication connection with each other. The memory 920 is configured to store instructions, and the processor 910 is configured to execute the instructions stored in the memory 920 to implement the method operations corresponding to the above Figures 7 to 8.

The processor 910 is configured to execute the instructions stored in the memory 920 to control the communication interface 930 to receive and send signals, so as to complete the operations in the above method. Wherein, the memory 920 may be integrated in the processor 910 or can be disposed separately from the processor 910.

The memory 920 may further comprise a storage system 921, a cache 922, and a RAM 923. The cache 922 is a level-1 memory disposed between the RAM 923 and the CPU, which is composed of static random-access memory chips (SRAM), featuring a relatively small capacity but a much higher speed than the main memory and a speed close to that of the CPU; the RAM 923 is an internal memory for directly exchanging data with the CPU, which can be read and written at any time (except during refreshing) and has a fast speed, and is usually used as a temporary data storage medium for an operating system or other running programs. The three are combined to realize the function of the memory 920.

In one implementation, the function of the communication interface 930 can be considered to be implemented via a transceiver circuit or a dedicated transceiver chip. The function of the processor 910 can be considered to be implemented via a dedicated processing chip, a processing circuit, a processor, or a general-purpose chip.

As another implementation, it is possible to use a general-purpose computer to implement the device provided in the embodiment of the present disclosure. That is, the program codes for implementing the functions of the processor 910 and the communication interface 930 are stored in the memory 920, and a general-purpose processor implements the functions of the processor 910 and the communication interface 930 by executing the codes in the memory 920.

For the concepts, explanations, detailed descriptions and other operations involved in the device and related to the technical solutions according to the embodiments of the present disclosure, please refer to the descriptions of the method operations executed by the device in the foregoing methods or other embodiments, which will not be repeated herein.

As another implementation of this embodiment, a computer-readable storage medium is provided, on which instructions are stored, and when the instructions are executed, the method in the above method embodiment is executed.

As another implementation of this embodiment, a computer program product containing instructions is provided, and when the instructions are executed, the method in the above method embodiment is performed.

Those skilled in the art can understand that, for the convenience of description, only one memory and one processor are shown in FIG. 10. In an actual terminal or server, there may be multiple processors and memories. The memory may also be referred to as a storage medium or a storage device, etc., which is not limited in the embodiment of the present disclosure.

It should be understood that, in the embodiments of the present disclosure, the processor may be a Central Processing Unit (CPU), and the processor may also be other general-purpose processors, Digital Signal Processors (DSP), Application Specific Integrated Circuits (ASIC), Field-Programmable Gate Arrays (FPGA) or other programmable logic devices, discrete gate or transistor logic devices, discrete hardware components, and the like.

It should also be understood that the memory mentioned in the embodiments of the present disclosure may be a volatile memory or a non-volatile memory, or may comprise both volatile and non-volatile memories. Wherein, the non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), or a flash memory. The volatile memory may be a Random Access Memory (RAM), which is used as an external high-speed cache. By way of example and not limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchlink Dynamic Random Access Memory (SLDRAM), and Direct Rambus Random Access Memory (DR RAM).

It should be noted that when the processor is a general-purpose processor, a DSP, an ASIC, an FPGA or other programmable logic devices, discrete gate or transistor logic devices, or discrete hardware components, the memory (storage module) is integrated in the processor.

It should be noted that the memory described herein is intended to include, but is not limited to, these and any other suitable types of memory.

In addition to the data bus, the bus may also comprise a power bus, a control bus, a status signal bus, etc. However, for the sake of clear description, various buses are marked as buses in the figure.

It should also be understood that the first, second, third, fourth and various numerical numbers herein are only distinctions made for the convenience of description and are not intended to limit the scope of the present disclosure.

It should also be understood that the terms "and/or" herein is only an association relationship describing associated objects, indicating that there may be three relationships, for example, A and/or B may indicate: A exists alone, A and B exist at the same time, and B exists alone. In addition, the character "/" herein generally indicates that the associated objects before and after are in an "or" relationship.

In the implementation process, each operation of the above method can be completed by an integrated logic circuit of hardware in a processor or instructions in the form of software. The operations of the method disclosed in conjunction with the embodiments of the present disclosure can be directly implemented by a hardware processor for execution, or implemented by a combination of hardware and software modules in the processor. The software module may be located in a mature storage medium in the art such as a random access memory, a flash memory, a read-only memory, a programmable read-only memory or an electrically erasable programmable memory, a register, etc. The storage medium is located in the memory, and the processor reads information in the memory and completes the operations of the above method in conjunction with its hardware. To avoid repetition, it is not described in detail here.

In various embodiments of the present disclosure, the serial numbers of the above processes do not imply a sequential order of execution, and the execution order of each process should be determined by its function and internal logic, and should not constitute any limitation on the implementation process of the embodiments of the present disclosure.

Those skilled in the art will appreciate that the various illustrative logical blocks (ILB) and operations described in conjunction with the embodiments disclosed herein can be implemented in electronic hardware, or in a combination of computer software and electronic hardware. Whether these functions are executed in hardware or software depends on the specific application and design constraint conditions of the technical solution. Professional technicians can use different methods to implement the described functions for each specific application, but such implementation should not be regarded as exceeding the scope of the present disclosure.

In the several embodiments provided in the present disclosure, it should be understood that the disclosed system, device and method may be implemented in other manners. For example, the device embodiments described above are only schematic. For example, the division of the units is only a logical function division, and there may be other division manners in actual implementation, for example, multiple units or components may be combined or integrated into another system, or some features may be omitted or not executed. In addition, the shown or discussed mutual coupling or direct coupling or communication connection may be an indirect coupling or communication connection via some interfaces, devices or units, and may be in an electrical, mechanical or other form.

The units described as separate components may or may not be physically separate, and the components shown as units may or may not be physical units, that is, they may be located in one place, or may be distributed on a plurality of network units. Some or all of the units may be selected according to actual needs to realize the objectives of the solutions of the embodiments.

In addition, each functional unit in each embodiment of the present disclosure may be integrated into one processing unit, or each unit may exist alone physically, or two or more units may be integrated into one unit.

In the above embodiments, all or part of the implementation may be realized by software, hardware, firmware or any combination thereof. When implemented in software, the technical solution may be implemented in the form of a computer program product in whole or in part thereof. The computer program product includes one or more computer-executable instructions. When the computer program instructions are loaded and executed on a computer, the process or function described in the embodiment of the present disclosure is generated in whole or in part. The computer may be a general-purpose computer, a special-purpose computer, a computer network, or other programmable devices. The computer instructions can be stored in a computer-readable storage medium, or transmitted from one computer-readable storage medium to another computer-readable storage medium. For example, the computer instructions may be transmitted from a website, a computer, a server or a data center to another website, computer, server or data center in a wired (such as a coaxial cable, an optical fiber, a digital subscriber line) or wireless (such as infrared, wireless, microwave, etc.) manner. The computer-readable storage medium may be any available medium that can be accessed by a computer or a data storage device such as a server, a data center integrated with one or more available media. The available medium may be a magnetic medium (e.g., a floppy disk, a hard disk, a magnetic tape), an optical medium (e.g., a DVD), or a semiconductor medium e.g., a solid-state hard disk), and the like.

An embodiment of the present disclosure further provides a computer-readable storage medium, the computer-readable storage medium stores a computer program, and the computer program is executed by a processor to implement part or all of the operations of any one of the methods described in the above method embodiments.

An embodiment of the present disclosure further provides a computer program product, the computer program product comprises a non-transitory computer-readable storage medium storing a computer program, and the computer program is operable to cause a computer to perform part or all of the operations of any one of the methods described in the aforesaid method embodiments.

The foregoing descriptions are merely specific embodiments of the present disclosure, and the protection scope of the present disclosure is not limited thereto. Any change or substitution that can be readily conceived of by any person skilled in the art within the technical scope disclosed in the present disclosure shall be covered by the protection scope of the present disclosure. Therefore, the protection scope of the present disclosure shall be governed by the protection scope of the claims.

## Claims

1. An electrical equipment system (10) for a vehicle, comprising: a central controller (110), M electrical devices (130), and a first communication line (111), the central controller being in communication connection with the M electrical devices via the first communication line, wherein M being a positive integer greater than 1;
the electrical device being configured to collect status information of a vehicle and send the status information to the central controller; and
the central controller being configured to receive the status information of the vehicle.

2. The electrical equipment system according to claim 1, wherein the M electrical devices comprise K electrical device groups (140), wherein K being a positive integer and K < M;
an electrical device group comprises one or more electrical devices, and the distance between any two electrical devices in an electrical device group comprising a plurality of electrical devices being less than a preset value.

3. The electrical equipment system according to claim 2, wherein each of the K electrical device groups being electrically connected to the first communication line via a second communication line (112).

4. The electrical equipment system according to claim 3, wherein the second communication line comprises a second main communication line and one or more second branch communication lines, and the one or more second branch communication lines being electrically connected to the first communication line via the second main communication line.

5. The electrical equipment system according to claim 3 or 4, wherein the second communication line being a wireless communication line or a wired communication line.

6. The electrical equipment system according to any one of claims 1 to 5, wherein the communication mode of the first communication line being one of Ethernet, CAN communication, LIN communication, or optical communication.

7. The electrical equipment system according to any one of claims 1 to 6, wherein the central controller comprises a first interface (113) and a second interface (114), the first communication line being electrically connected to the first interface and the second interface, and each of the M electrical devices being electrically connected to the first interface or the second interface via the first communication line.

8. The electrical equipment system according to any one of claims 1 to 7, wherein the first communication line comprises a surrounding closed line.

9. The electrical equipment system according to any one of claims 1 to 8, wherein the electrical equipment system further comprises a power supply module (120), the power supply module being electrically connected to the central controller and the M electrical devices.

10. The electrical equipment system according to claim 9, wherein the power supply module being electrically connected to the central controller and the M electrical devices via the first communication line.

11. The electrical equipment system according to claim 10, wherein the electrical device being provided with a first communication interface (1311) and a first power line interface (1312), the first communication interface being electrically connected to the central controller via the first communication line, and the first power line interface being electrically connected to the power supply module via the first communication line.

12. The electrical equipment system according to claim 11, wherein the electrical device comprises an electrical device body (132) and a wiring harness connector (131), the first communication interface and the first power line interface being disposed on the wiring harness connector, and the wiring harness connector being electrically connected to the electrical device body.

13. The electrical equipment system according to any one of claims 1 to 12, wherein the electrical device comprises at least one of an actuator or a sensor.

14. The electrical equipment system according to any one of claims 1 to 13, wherein the central controller being further configured to generate a control instruction based on the status information of the vehicle and send the control instruction to the electrical device; and
the electrical device being further configured to receive the control instruction.

15. A vehicle (90), wherein the vehicle being equipped with the electrical equipment system (10) for a vehicle according to any one of claims 1 to 14.
